# EUROPÄISCHE PATENTSCHRIFT

(11) **EP 0 540 698 B1**
(45) Veröffentlichungstag und Bekanntmachung des Hinweises auf die Patenterteilung: **26.07.1995**
(21) Anmeldenummer: 92906834.4
(22) Anmeldetag: 24.03.1992
(51) Int. Cl.: B01D 39/08, B01D 39/04, B01D 29/15, B01D 27/04

(54) **VORRICHTUNG ZUM ENTFERNEN VON SCHMUTZPARTIKELN AUS WASSER**
DEVICE FOR REMOVING DIRT PARTICLES FROM WATER
DISPOSITIF D'EXTRACTION DES PARTICULES POLLUANTES DE L'EAU

(30) Priorität: 03.05.1991 DE 9105485 U; 12.12.1991 DE 4140892
(43) Veröffentlichungstag der Anmeldung: 12.05.1993
(73) Patentinhaber: BOCO GmbH & CO., D-22113 Hamburg (DE)
(72) Erfinder: WÖLK, Reinhard, D-2000 Hamburg 74 (DE)
(74) Vertreter: Glaeser, Joachim, Dipl.-Ing.
(86) Internationale Anmeldenummer: EP9200639
(87) Internationale Veröffentlichungsnummer: WO9219356

(56) Entgegenhaltungen:
- EP-A- 0 009 141
- DD-A- 313
- GB-A- 398 055
- KRÜGER R., "DIE FILTER", 1886, Kapitel V, "Die Gewebefilter und die Filterpressen", Hartleben's Verlag, Wien
- KUFFERATH A., "FILTRATION UND FILTER", 1952, 2. Auflage, "Die Filtermassen", Chemisch-technischer Verlag Dr. Gustav Bodenbender, Berlin

## Beschreibung

Die Erfindung bezieht sich auf eine Vorrichtung zum Entfernen von Schmutzpartikeln (mit und ohne Ölanlagerungen) aus Wasser oder aus Schmutzwasser ohne freies Öl, insbesondere Schmutzwasser, das nach dem Waschen von Kleidungsstücken, Berufsbekleidungsstücken und dergl. in Großwäschereien anfällt.

Bei dem Abwasser, das von Großwäschereien anfällt, besteht das Problem der Aufbereitung, wobei das Ziel ist, das Wasser soweit aufzubereiten, daß es den Vorschriften entsprechend in die öffentliche Kanalisation eingeleitet werden kann.

Es sind eine Vielzahl von Verfahren bekannt, die in diesem Zusammenhang eingesetzt werden, hier seien nur genannt Elektroflotation, Verdampfung, Flockung, Ultrafiltration und dergl. Bei allen diesen Verfahren stellen sich im wesentlichen drei Nachteile heraus, wobei die meisten dieser Verfahren auch tatsächlich mit allen drei Nachteilen verbunden sind. Es handelt sich um den zusätzlichen Einsatz von Chemikalien, so daß nach Gebrauch der Chemikalien Sondermüll entsorgt werden muß. Der Einsatz von Energie, sei es zu Heiz- und Erwärmungszwecken oder zum Rühren, macht sich durch einen hohen Aufpreis bei der Aufbereitung von Wasser bemerkbar. Schließlich der hohe apparative Aufwand, der bei einigen Verfahren besonders hoch ist.

Es ist bekannt, Filterelemente aus aufeinander angeordneten textilen Flächen gebilden herzustellen (EP-A-0009141). Auch gibt es bereits Filtertücher aus gewebten Fasern (DD-A-313). Der hierbei erzielbare Wirkungsgrad bei der Entfernung von Schmutzpartikeln ist jedoch gering.

Die Erfindung befaßt sich im Zusammenhang mit der Aufbereitung von Abwasser mit dem Problem, speziell die Feststoffteile und Schmutzpartikel aus dem Abwasser so zu entfernen, daß nur ein geringer Anteil an Sondermüll anfällt, der zudem problemlos transportiert oder verbrannt werden kann.

Erreicht wird dies mit Hilfe der Vorrichtung gemäß den Patentansprüchen und dem zugehörigen Verfahren, das später beschrieben wird.

Ein wesentliches Merkmal der vorliegenden Erfindung ist darin zu sehen, daß die Textilien, die sich im Inneren der Vorrichtung gemäß der Erfindung befinden, im wesentlichen so ausgerichtet sind, daß die Kett- und Schußfäden der Textilien sich in Strömungsrichtung des Wassers erstrecken, und nicht etwa quer angeordnet sind, wie man dies bei einem Sieb tun würde. Im Prinzip handelt es sich bei der vorliegenden Erfindung also um ein Rieselfilter, bei welchem textiles Material in besonderer Ausrichtung eingesetzt wird.

Es besteht die Möglichkeit, die Strömung des Schmutzwassers durch den Behälter der Vorrichtung gemäß der Erfindung durch Anlegen von Druck zu erhöhen, wenngleich das Durchlaufenlassen des Schmutzwassers ohne zusätzlichen Druck vom Energetischen her am günstigsten ist. Versuche haben ergeben, daß das Absaugen von unten her unter einem erhöhten Druck bessere Ergebnisse gibt als das Aufdrücken von der Einlaufseite her.

Von besonderer Bedeutung für die vorliegende Erfindung ist das Vorsehen einer Sperre im Ablaufbereich, um zu verhindern, daß das Wasser an der Wandung des Behälters entlang zum Ablauf gelangt.

Versuche im Zusammenhang mit der vorliegenden Erfindung haben weiterhin ergeben, daß zumindest teilweise Schwermetalle aus dem Abwasser mit der Vorrichtung gemäß der Erfindung entfernt werden können.

Die Erfindung wird nachstehend anhand der Zeichnung beispielsweise erläutert.

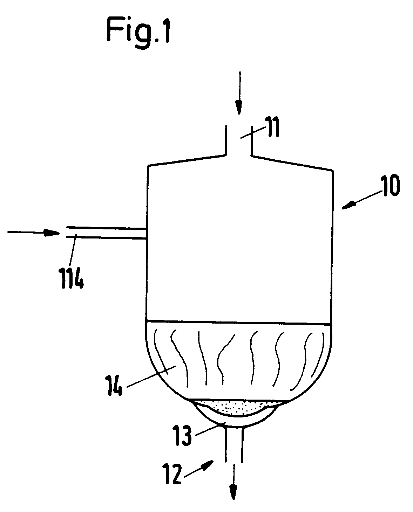

- Fig. 1: zeigt eine schaubildliche Ansicht einer Vorrichtung gemäß der Erfindung.
- Fig. 2: zeigt Einzelheiten aus dem Ablaufbereich der in Fig. 1 gezeigten Vorrichtung, allerdings in vergrößertem Maßstab.

Diese zeigt eine Querschnittsansicht durch eine Vorrichtung gemäß der Erfindung.

Mit 10 ist ein Behälter gezeigt, der im Zusammenhang mit der vorliegenden Erfindung eingesetzt wird. Der Behälter hat eine Zulauföffnung 11, durch welche das Schmutzwasser eingeleitet werden kann. Die Zulauföffnung 11 kann dicht verschlossen werden. Im unteren Bereich des Behälters 10 befindet sich ein Ablaufsieb 13, so daß durch eine Ablaufleitung 12 gereinigtes Wasser, das im wesentlichen klar ist, wenngleich es eine gelbliche Farbe haben kann, ablaufen kann.

Mit 14 ist eine Lage oder Füllung aus Textilien in Form von Kleidungsstücken bezeichnet, die lose zusammengelegt werden und eine Art Filter bilden. Wesentlich ist in diesem Zusammenhang, daß die Textilien eine relativ große Oberfläche bilden, auf denen das verunreinigte Wasser ablaufen oder herunterrieseln kann. Bedeutsam ist, daß sich jedoch auf der oberen Oberfläche in der Art eines Kuchens die Schmutzpartikel ansammeln und später - wie noch erläutert werden wird - dem Behälter 10 entnommen werden können.

Mit 114 ist eine Dampf- oder Druckluftzuleitung bezeichnet.

Nach der Erfindung wird wie folgt verfahren:
Nachdem die Lage 14 aus den Bekleidungsstücken in den Behälter 10 eingebracht worden ist, wird von oben her über die Leitung 11 Schmutzwasser zugeleitet. Dieses Schmutzwasser hat zuvor eine Säuerungsstufe durchlaufen, so daß es einen ph-Wert im Bereich von 3 und 4 aufweist. Ebenso ist freies Öl aus diesem Schmutzwasser durch irgendeines der bekannten Verfahren entfernt worden.

Der Behälter 10 wird verschlossen und dem Schmutzwasser die Möglichkeit gegeben, längs der Textilstücke 14 entlangzurieseln und über das Sieb 13 in die Leitung 12 nach außen zu gelangen. Das ablaufende Wasser ist, wie bereits erwähnt, klar, wenngleich es beispielsweise eine leicht gelbliche Farbe haben kann.

Im Laufe der Zeit sammeln sich die Feststoffpartikel, die im wesentlichen aus den eigentlichen Schmutzpartikeln, die das Schmutzwasser verunreinigen, aber auch aus Waschmittelteilchen bestehen, die nämlich die Schmutzpartikel aus dem zu reinigenden Kleidungsstück entfernt haben.

Nach einer gewissen Zeitspanne kann entweder Druckluft oder Wasserdampf in den Behälter 10 eingeleitet werden. Hierdurch wird eine Erhöhung der Fließgeschwindigkeit des noch verbliebenden Wassers erreicht.

Die Textilien können mehrfach verwendet werden, aber selbst wenn sie nur einmal oder wenige Male eingesetzt werden können, so ist das Verfahren gemäß der Erfindung deshalb sehr wirtschaftlich und vorteilhaft, weil es sich hierbei um Material handelt, das ohnehin bereits ausgemustert worden ist und nicht mehr benötigt wird. Insofern wird hier als Filtermaterial ein Stoff eingesetzt, der bereits zuvor als Abfall bezeichnet werden kann.

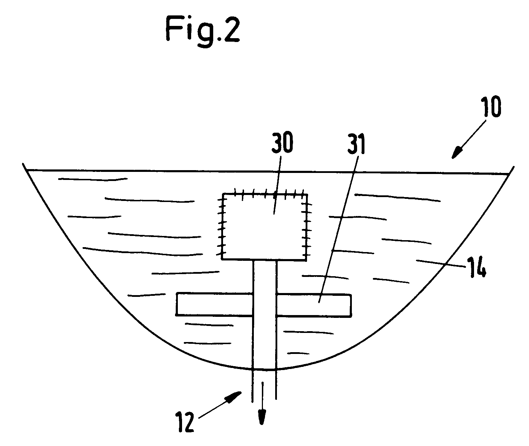

Die Figur 2 zeigt Einzelheiten im Bereich des Auslaufes 12. Wäre nämlich die Ablaufleitung im untersten Teil des Behälters 10 angeordnet, so könnte sich das mehr oder weniger gereinigte Schmutzwasser an der Wandung des Behälters 10 entlang zur Auslauföffnung 12 hin bewegen. Um dies zu verhindern befindet sich oberhalb des Auslaufes ein Rohr und darüber eine Art Zylinder, der an seinem Mantel und der nach oben gerichteten Stirnseite mit Öffnungen versehen ist. Dies sind die Austrittsstellen für das Wasser, d.h. nicht im unteren Bereich des Behälters 10 sondern oberhalb.

Um weiterhin einen direkten Übergang zu verhindern, befindet sich unterhalb des zylinderförmigen Auslaufteils ein Sperrteil 31, der beispielsweise eine gummierte Oberfläche haben kann.

## Patentansprüche

1. Vorrichtung mit einem Behälter, der eine Einlauföffnung (11) und unten einen Siebablauf (12, 13) aufweist zum Entfernen von Schmutzpartikeln (mit und ohne Ölanlagerungen) aus Wasser oder aus Schmutzwasser ohne freies Öl, insbesondere Schmutzwasser, das nach dem Waschen von Kleidungsstücken, Berufsbekleidungsstücken und dergl. in Großwäschereien anfällt, gekennzeichnet durch einen abschließbaren Behälter (10), der im Inneren oberhalb des Ablaufs eine Lage aus lose zusammengelegten Textilien, insbesondere gebrauchte Kleidungsstücke, als Rieselfilter enthält, die im wesentlichen so ausgerichtet sind, daß die Kett- und Schußfäden sich in Strömungsrichtung des Wassers erstrecken.

2. Vorrichtung nach Anspruch 1, dadurch gekennzeichnet, daß der Siebablauf des Behälters oberhalb des unteren Teils des Behälters angeordnet ist.

3. Vorrichtung nach Anspruch 2, dadurch gekennzeichnet, daß oberhalb des unteren Endes des Behälters (10) und unterhalb des Siebauslaufes ein Sperrteil (31) angeordnet ist.

## Claims

1. Device with a container comprising an inlet opening (11) and at the bottom a screening outlet (12, 13) for removing dirt particles (with and without oil accumulation) from water or from dirty water without free oil, especially dirty water resulting from the washing of clothes, working clothes and the like in big laundries, characterized by a lockable container (10) which contains in its interior above the outlet a layer of loosely folded textiles, especially used clothes, as a trickling filter, that are essentially aligned in a way that the warps and shoots extend in flow direction of the water.

2. Device according to Claim 1, characterized in that the screening outlet of the container is arranged above the lower part of the container.

3. Device according to Claim 2, characterized in that a locking member (31) is arranged above the lower end of the container (10) and below the screening outlet.

## Revendications

1. Dispositif comportant un récipient présentant un orifice d'entrée (11) et en dessous un orifice de sortie avec filtre (12, 13), destiné à l'extraction des particules polluantes (avec et sans additions d'huile) de l'eau ou de l'eau polluée sans huile libre, en particulier l'eau polluée résultant du lavage de vêtements, de vêtements de travail et similaires dans les blanchisseries de gros, caractérisé par un récipient obturable (10) contenant, comme filtre à ruissellement, à l'intérieur, au-dessus de l'orifice de sortie, une couche de textiles assemblés d'une manière lâche, en particulier des vêtements usagés, alignés pour l'essentiel de manière telle que les fils de chaîne et de trame s'étendent dans la direction de l'écoulement de l'eau.

2. Dispositif selon la revendication 1, caractérisé en ce que l'orifice de sortie avec filtre du récipient est disposé au-dessus de la partie inférieure du récipient.

3. Dispositif selon la revendication 2, caractérisé en ce qu'une pièce de retenue (31) est disposée au-dessus de l'extrémité inférieure du récipient et au-dessous de l'orifice de sortie avec filtre.
